# EUROPEAN PATENT APPLICATION

(11) **EP 4 160 174 A1**
(43) Date of publication of application: **05.04.2023**
(21) Application number: 21425052.4
(22) Date of filing: 29.09.2021
(51) Int. Cl.: G01M 3/24, G01F 15/00, G01M 5/00, G01N 29/07

(54) **MONITORING SYSTEM FOR MONITORING THE CONDITION OF A WATER NETWORK**

(71) Applicant: Filipetti - S.p.A., 20129 Milano (IT)
(72) Inventor: Iddas, Paolo, I-62019 RECANATI (MC) (IT)
(74) Representative: Baldi, Claudio

(57) **Abstract**

A monitoring system (100) for monitoring water leaks comprises: a pipe (1), a control box (6) disposed in correspondence with each inspection well (2), a leak sensor (3) and a wear sensor (4) disposed in the pipe (1) in each inspection well (2) and electrically connected to a respective control box (6), a gateway (8), a cloud storing platform (9) on the Internet; a cloud maintaining platform (91) on the Internet, monitoring means (90) configured to analyze the data of the cloud storing platform and to send alarms (Al) to the cloud maintaining platform (91), as well as user devices (92) configured to access the cloud maintaining platform (91) and to receive said alarms (Al).

## Description

The present invention relates to a monitoring system used for monitoring the condition of a water network.

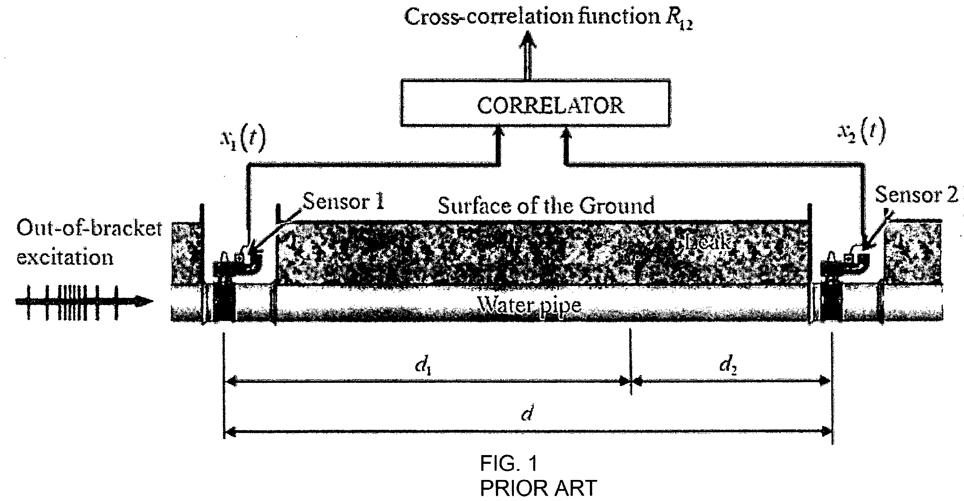

Fig. 1 illustrates a system used for detecting water leaks in a pipe according to the prior art. Such a detection system comprises two sensors arranged in the pipe at a known distance (d). The sensors are excited with an excitation signal that is propagated in the pipe and a correlator performs a cross-correlation function (R₁₂) between the signals (xi(t); x₂(t)) detected by the two sensors. By analyzing the cross-correlation function (R₁₂), one can detect the presence of a leak in the pipe section between the two sensors, as well as the position of the leak at a distance (d1) from the first sensor and at a distance (d2) from the second sensor. However, such a system of the prior art only works when the excitation signal is sent, without the possibility of leaving the sensors in operation for a long time, and therefore such a system is not capable of monitoring the wear of the pipe continuously.

The purpose of the present invention is to eliminate the drawbacks of the prior art by providing a monitoring system for monitoring the water leaks in a pipe that is capable of detecting the position of the water leaks in the pipe.

Another purpose is to provide a system for monitoring the generic wear of pipes of water networks that is efficient and capable of performing continuous monitoring.

These purposes are achieved according to the invention with the characteristics of the appended independent claims.

Advantageous embodiments of the invention appear from the dependent claims.

Additional features of the invention will be clearer from the following detailed description, which refers to a merely illustrative, not limiting embodiment, as shown in the appended figures, wherein:
Fig. 1 is a diagrammatic view of a monitoring system of water leaks according to the prior art;
Fig. 2 is a block diagram that shows the monitoring system of water leaks according to the invention;
Fig. 3 is a top view of a pipe section in an inspection well of the monitoring system of Fig. 2;
Fig. 4 is a cross-sectional view of the inspection well of Fig. 3, which shows a pole that stands vertically on the ground;
Fig. 5 is an electrical block diagram, which shows a control box of the system of Fig. 2 in detail;
Fig. 6 is a block diagram, which shows a communication between a master control box and a slave control box;
Fig. 7 is an electrical diagram of a control box, which shows a power system; and
Fig. 8 is a block diagram, which shows a communication between four control boxes of the system according to the invention.

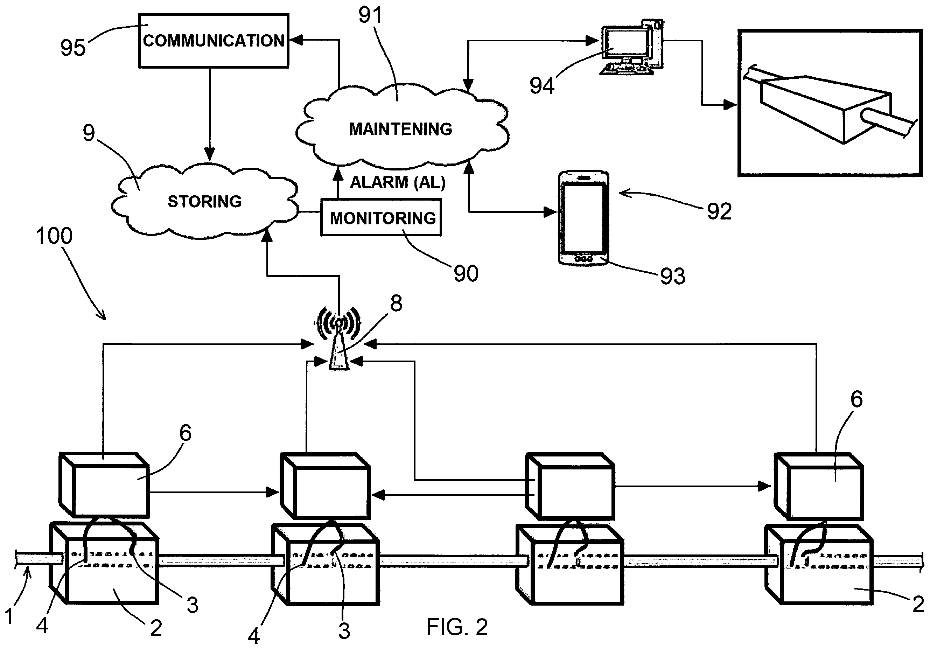

With reference to Figs. 2 to 8, the monitoring system for monitoring the condition of a water network according to the invention is disclosed, which is generally indicated with reference numeral 100.

Fig. 2 shows a pipe (1), in particular a water pipe, which is generally buried in the ground. Therefore, a plurality of inspection wells (2) is provided along the pipe (1) in order to inspect the pipe. By way of example, inspection wells are provided and spaced by a distance of approximately 200 m. Fig. 2 shows four inspection wells.

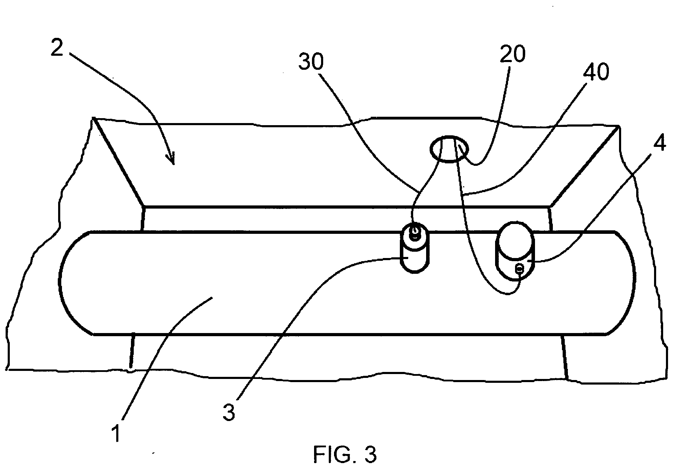

With reference to Fig. 3, a leak sensor (3) and a wear sensor (4) are disposed in a section of the pipe (1) inside the inspection well (2).

Both the leak sensor (3) and the wear sensor (4) are "noise" sensors, i.e. acoustic-electric transducers that detect a high and/or low frequency audio signal given by a frequency response of the pipe (1) to an acoustic wave that propagates in the pipe. In particular, the leak sensor (3) is a piezo-ceramic transducer and the wear sensor (4) is a piezo-electric transducer.

If the pipe (1) is metallic, the sensors (3, 4) are attached to the pipe with a magnetic fastening system. If the pipe is not metallic, the sensors (3, 4) are fixed to the pipe by means of a mechanical fixing system that ensures a perfect adherence of the sensor to the pipe.

Each sensor (3, 4) is connected to a respective electrical cable (30, 40) which carries a power supply to the sensors and electrical signals detected by the sensors. The connection can be direct or galvanically isolated.

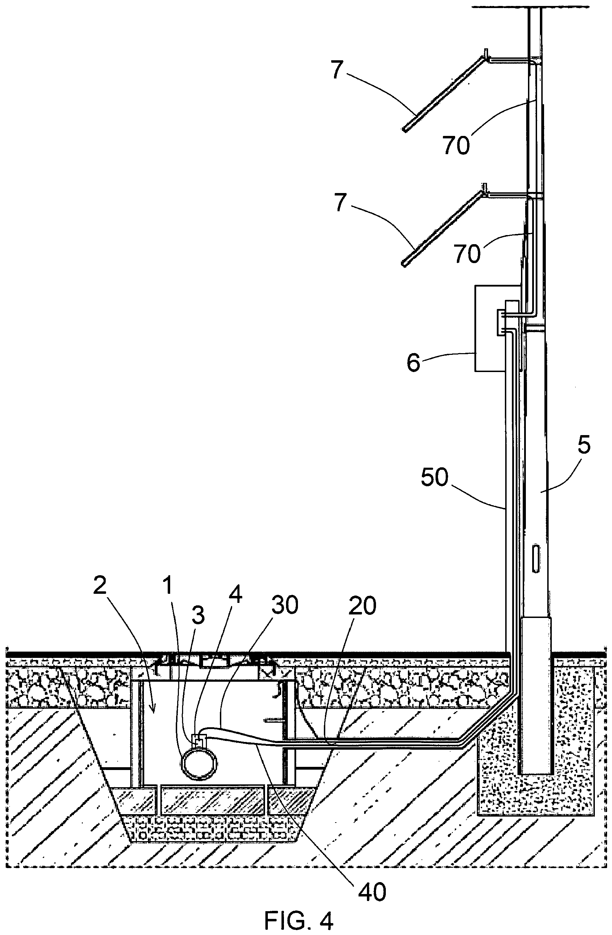

With reference to Fig. 4, a through hole (20) is made in a side wall of the inspection well (2), near a pole (5) that stands vertically on the ground, generally at the roadside. The hole (20) communicates with a pipe (50) disposed on the pole (5). The pipe (50) terminates in a control box (6) supported by the pole (5).

Devices are arranged inside the control box (6) to manage the power supply of the sensors (3, 4), to receive and process the signals detected by the sensors (3, 4), and to remotely transmit data indicative of such signals detected by the sensors.

Therefore, the electrical cables (30, 40) of the sensors are introduced in the hole (20) of the inspection well, are passed through the pipe (50) and are connected to the control box (6).

Solar panels (7) are supported by the pole (5). The solar panels (7) are electrically connected to the control box (6) by means of electrical cables (70). These are examples of energy sources that can be used to make the control box energetically self-sufficient; in such a way, it is not necessary to connect the control box to the mains. Other energy conversion systems (i.e. from vibrations, wind, and the like) can be adopted to achieve the same purpose.

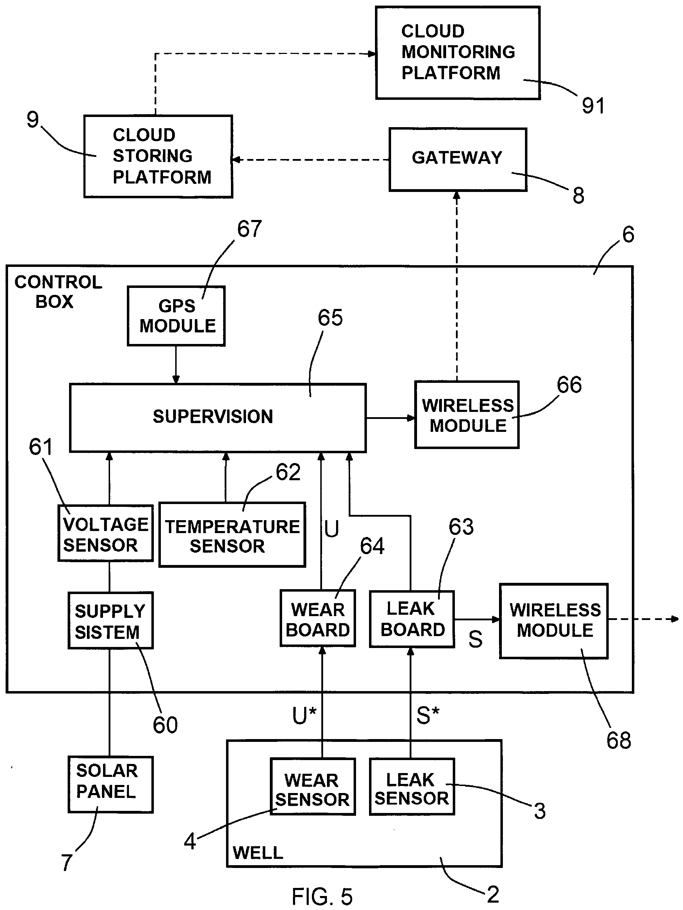

With reference to Fig. 5, the control box (6) comprises a power system (60) connected to the solar panels (7). The power system (60) comprises a battery charged by the solar panels (7), by means of a charge controller, connected to an electrical power supply suitable to power all the devices of the control box and the sensors (3, 4). Obviously, if an electrical mains is available, the power system (60) can be connected to the electrical mains; in such a case, the battery and the solar panels can be omitted.

The control box (6) comprises:
- a GPS module (67) comprising a global positioning sensor, such as an 8GPS or the like, for time synchronization with other control boxes;
- a voltage sensor (61) connected to the power system (60) to detect a correct operation of the power system; and
- a temperature sensor (62) disposed in the control box (6) to detect the temperature inside the control box.

If the power system (60) comprises a battery, the voltage sensor (61) may detect the charge of the battery.

The control box (6) comprises:
- a leak board (63) electrically connected to the leak sensor (3),
- a wear board (64) electrically connected to the wear sensor (4).

The leak sensor (3) outputs an analog audio signal (S*). The leak board (63) comprises an amplifier and possibly a filter to amplify and filter the audio signal. Then a leak signal (S) is output from the leak board (68) by processing the analog audio signal from the leak sensor (3).

The wear sensor (4) outputs a potentially already pre-treated analog audio signal (U*). The wear board (64) comprises an amplifier and possibly a filter to amplify and filter the audio signal indicative of a wear level of the pipe (1). Therefore, a wear signal (U) is output from the wear board (64), which is a numerical value indicative of the wear level of the pipe obtained from processing an audio signal. By way of example, such a numerical value can be normalized between 0 and 1, namely 0 = no wear and 1 = maximum wear level.

The voltage sensor (61), the global positioning sensor of the GPS module (67), the temperature sensor (62), the leak board (63) and the wear board (64) are connected to a supervisor (65) which is responsible for synchronizing the received signals for a remote transmission and for managing the power supply of the various components of the control box. The supervisor (61) can be any microcontroller programmed numerical processing system, with an uninterruptible power supply, such as a dedicated UPS.

The control box (6) comprises a first wireless communication module (66) electrically connected to the supervisor (65) and suitable for communicating with a gateway (8). The first wireless communication module (66) can be a LoRa (Long Range) communication module with spread-spectrum frequency modulation technology operating in license-free frequencies. This provides a signal coverage with a radius greater than one kilometer. Therefore, the gateway (8) can be placed in any position that can be reached by the first wireless communication module (66) of each control box of the system (100).

In the example of Fig. 2 an 800 m section of pipe is monitored, which comprises four pieces (2) spaced 200 m apart, and consequently four control boxes (6). In such a case a single gateway (8) is sufficient to cover the four control boxes (6). Obviously, more gateways may be provided if a very long pipe section (several km) is to be monitored, requiring numerous inspection wells spaced about 200 m apart.

Referring again to Fig. 5, the control box (6) comprises the GPS module (67) to detect the position of the box (6). The GPS module (67) is connected to the supervisor (65) to synchronize the control boxes (6), as described hereinafter.

The control box (6) comprises a second wireless transmission module (68) for communicating with another control box (6). This second wireless transmission module (68) has an analog antenna with coverage greater than the length of the pipe, so that a control box (6) can communicate with one or two adjacent control boxes disposed upstream and/or downstream. The second wireless transmission module (68) is connected to the leak board (63) in such a way that a control box can send a leak signal (S) to an adjacent control box.

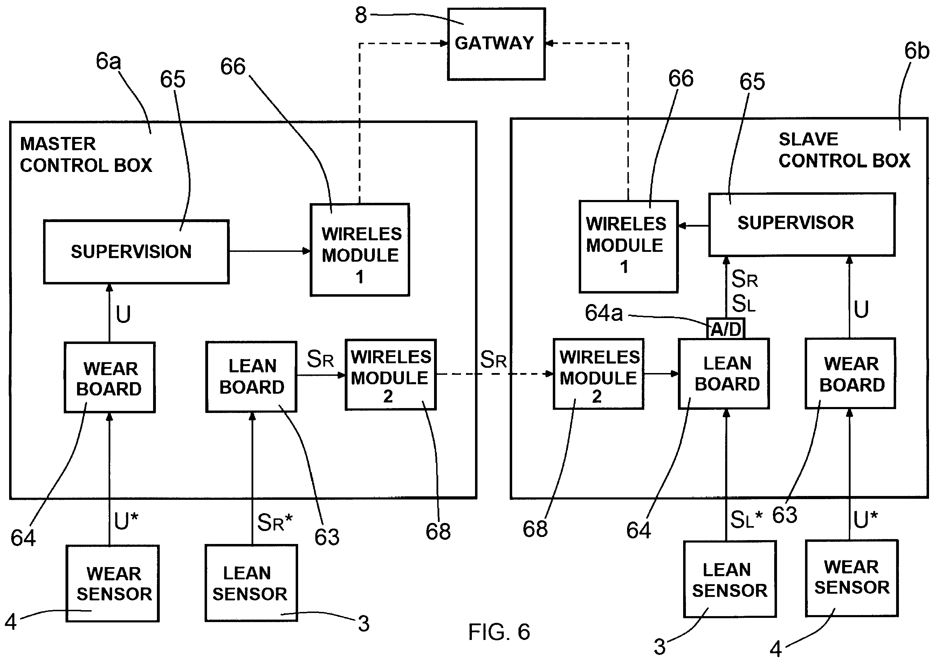

Referring to Fig. 6, communication between two control boxes (6a, 6b) can be performed in master and slave mode. By means of the second wireless transmission module (68), a master control box (6a) sends a remote leak signal (S_{R}) to a slave control box (6b). The slave control box (6b) receives the remote leak signal (S_{R}) from the master control box (6a) and processes a local leak signal (S_{L}) from the analog audio signal (S_{L}*) of the leak sensor (3) of the slave control box.

The remote leak signal (S_{R}) is received by the leak board (63) of the slave control box (6b) which also processes the local leak signal (S_{L}).

The remote leak signal (S_{R}) and the local leak signal (S_{L}) are synchronized and converted to digital with a digital analog converter (64a) of the leak board of the slave control box (6b).

The remote leak signal (S_{R}) and local leak signal (S_{L}), which are synchronized and in digital format, are sent to the supervisor (65); then said remote leak signal (S_{R}) and said local leak signal (S_{L}) are sent to the gateway (8), via the first wireless transmission module (66) of the slave control box.

The fact that the slave control box (6b) must receive the remote leak signal (S_{R}) from the master control box is an essential feature of the system (100) for the synchronization of the remote leak signal (S_{R}) and of local leak signal (S_{L}). In fact, a correlation between two signals at the ends of the pipe section is required in order to detect the leaks in a pipe section; therefore the two signals must be perfectly synchronized.

The wear signals (U) processed in the wear board (64) of the master control box and of the slave control box are sent to the supervisors (65) of the respective control boxes and are sent to the gateway (8) via the first wireless communication modules (66).

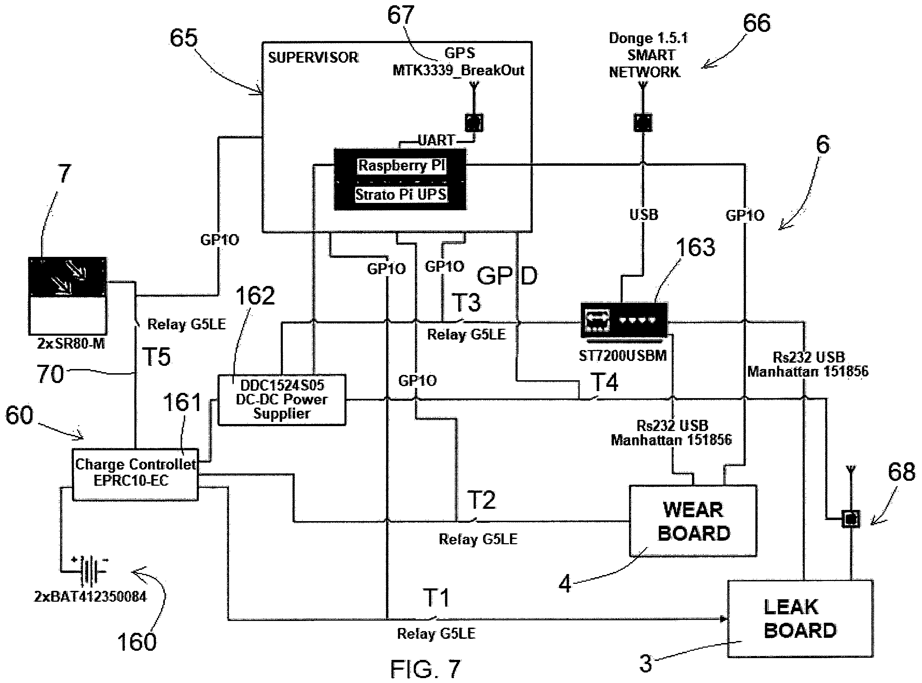

Referring to Fig. 7, the power system (60) comprises a rechargeable battery (160), a charge controller (161), and an electrical power supply (162).

The solar panels (7) are connected to the charge controller (161) which is connected to the battery (160) to charge the battery (160). The charge controller (161) is connected to the leak board (3) and the wear board (4) to power them. A first switch (T1) and a second switch (T2) can open/close the power supply to the leak board (3) and the wear board (4).

The electrical power supply (162) is connected to the charge controller (161) to take the electrical charge and to the supervisor (65) to power it.

The electrical power supply (162) is connected to the first wireless communication module (66) via a hub (163), such as a hub with USB ports, in such a way to power the first wireless communication module (66).

The power supply (162) is connected to the second wireless communication module (68), so as to power the second wireless communication module (68).

A third switch (T3) and a fourth switch (T4) can open/close the power supply of the first wireless communication module (66) and of the second wireless communication module (68).

A fifth switch (T5) is disposed in the electrical cable (70) that connects the solar panels to the charge controller (161).

The switches (T1, T2, T3, T4, T5) are controlled by the supervisor (65) via respective connections and controls.

If the control box (6a) is a master, after the leak board (3) has processed the remote leak signal (S_{R}) and the second wireless communication module has sent the remote leak signal (S_{R}) to the slave, the supervisor (65) commands the opening of the first switch (T1) and of the fourth switch (T2) so as to cut off the power of the leak board (3) and of the second wireless communication module (68).

If the control box (6b) is a slave, after the leak board (3) has received the remote leak signal (S_{R}) from the master and has processed the local leak signal (S_{L}), the supervisor (65) commands the opening of the first switch (T1) and of the fourth switch (T2) so as to cut off the power of the leak board (3) and of the second wireless communication module (68). After the first wireless communication module has sent the remote leak signal and the local leak signal (S_{R}; S_{L}), which are received from the master and are processed by the slave, to the gateway (8) the supervisor (65) commands the opening of the third switch (T3) so as to cut off the power of the first wireless communication module (66).

In both cases, wherein the control box (6) is a slave or a master, after the wear board (4) has processed the wear signal (U) and the first wireless communication module has sent the wear signal (U) to the gateway (8), the supervisor (65) commands the opening of the second switch (T2) and of the third switch (T3) so as to cut off the power of the wear board (4) and of the first wireless communication module (66).

If the voltage sensor of the control box detects that the battery (160) is charged, the supervisor (65) commands the opening of the fifth switch (T5) so as to stop charging the battery of the solar panels.

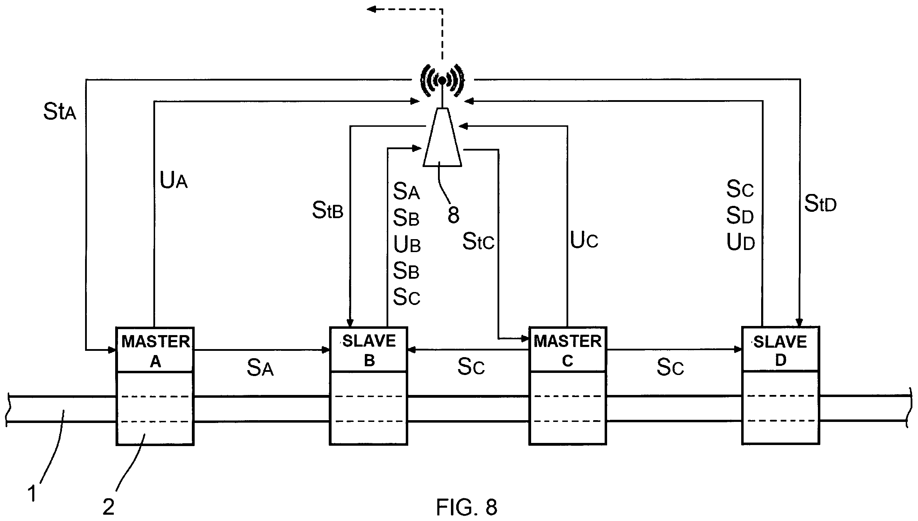

Fig. 8 illustrates an example with four control boxes (6), namely two master control boxes (A; C) and two slave control boxes (B; D).

The master (A) sends to the slave (B) a leak signal (S_{A}) obtained by processing the signal detected by its leak sensor (3) and sends a wear signal (U_{A}), which is obtained from processing the signal detected by its wear sensor (4), to the gateway (8).

The master (C) sends a leak signal (Sc), which is obtained from processing the signal detected by its leak sensor (3), to the slave (B) and to the slave (D) and sends a wear signal (Uc), which is obtained from processing the signal detected by its wear sensor (4), to the gateway (8).

The slave (B) receives the leak signal (S_{A}) from the master (A), the leak signal (Sc) from the master (C) and processes the leak signal (S_{B}) from the signal from its leak sensor (3). Then:
- the leak signal (S_{A}) and leak signal (S_{B}) indicative of pipe section AB; and
- the leak signal (S_{B}) and the leak signal (Sc) indicative of the pipe section BC
are sent by the slave (B) to the gateway (8).

The slave (B) processes a wear signal (U_{B}) from the signal detected by its wear sensor (4) and sends it to the gateway (8).

The slave (D) receives the leak signal (S_{c}) from the master (C) and processes the leak signal (S_{D}) from the signal of its leak sensor (3). Then the slave (D) sends the leak signal (Sc) and the leak signal (S_{D}) indicative of the pipe section CD to the gateway (8).

The slave (D) processes a wear signal (U_{D}) from a signal from its wear sensor (4) and sends it to the gateway (8).

Obviously, the transmission and the reception of said signals by means of the control boxes (6) are synchronized by means of respective synchronization and/or time and date-based signals.

By means of the first wireless communication module (66), each control box (6) sends information about temperature, power system and position of the control box, which are respectively detected by the temperature sensor (62), the voltage sensor (61) and GPS module (67), to the gateway (8). Otherwise said, the signals detected by the temperature sensor (62), by the voltage sensor (61), and by the GPS module (67) are sent to the supervisor (65), which synchronizes and sends them to the first wireless communication module (66).

Referring again to Fig. 2, the gateway (8) has a transmission module for a connection to the Internet. In this way, the gateway (8) is connected to a cloud storing platform (9) on the Internet, wherein the data sent from the control boxes (6) is stored. Monitoring means (90) analyze the data stored in the cloud storing platform (9) to detect any leaks and/or wear hazards in one of the monitored pipe sections, and to detect any malfunctioning of the power system or any overtemperature of the control box.

The monitoring means (90) comprise a wear algorithm that is responsible for analyzing the wear signals. If the numerical value of the wear signal is higher than a preset threshold value, it means that there is a risk of damage at short or medium term in a pipe section upstream the control box that has detected that particular threshold wear value.

The monitoring means (90) comprise a leak algorithm that is responsible for analyzing leak signals. The leak algorithm performs a cross-correlation between the leak signals between two adjacent control boxes that identify a pipe section.

The monitoring means (C) also comprise:
- a power algorithm that is responsible for analyzing the voltage signal detected by the voltage sensor (61) of each control box in order to assess whether the power system (60) is operating properly, and
- a temperature algorithm that is responsible for analyzing the temperature detected by the temperature sensor (62) of each control box in order to assess whether any control box is reaching a very high temperature that would impair its operation.

The algorithms of the monitoring means (90) are cloud applications on the Internet. The algorithms of the monitoring media (90) perform comparisons with threshold values and send alarms (Al) to a cloud maintaining platform (91) on the Internet.

User devices (92) are connected to the cloud maintaining platform (91) to receive alarms (Al). The user devices (92) may be smart devices (93) or PCs (94) with an Internet connection. Maintenance operators receive the alarms via the user devices (92) and can go to the site to carry out maintenance operations on the pipe (1) and/or on the control box (6).

The system (100) further comprises communication means (95) that put in communication the cloud maintaining platform (91) with the cloud storing platform (9) for the exchange of data. In this way, a user can go to the site of the pipe (1) and can send the data of the pipe, such as geometry, diameter, thickness and material, to the cloud maintaining platform (91) via the user devices (92). Such data is sent to the cloud storing platform (9) via the communication means (95) and thus can be used by the monitoring means (90) to monitor wear and leaks.

## Claims

1. Monitoring system (100) for monitoring the condition of a water network comprising:
- a plurality of pipes (1) to be monitored,
- a plurality of inspection wells (2) disposed along the pipe (1),
- a control box (6) disposed in correspondence with each inspection well (2),
- a leak sensor (3) and a wear sensor (4) disposed in the pipe (1) inside each inspection well (2); said leak sensor (3) and said wear sensor (4) of each inspection well (2) being electrically connected to a respective control box (6) by means of electric cables (30, 40),
- a gateway (8) having a wireless transmission module and a transmission module for connection to the Internet,
- a cloud storing platform (9) on the Internet in order to store data;
- a cloud maintaining platform (91) on the Internet connected to said cloud storing platform (9),
- monitoring means (90) configured to analyze the data of the cloud storing platform and to send alarms (AI) to the cloud maintaining platform (91), and
- user devices (92) configured to access the cloud maintaining platform (91) and to receive said alarms (Al),
wherein each control box (6) comprises:
- a leak board (63) that receives an analog audio signal (S*) from said leak sensor (3) and processes said analog audio signal (S*) into a leak signal (S),
- a wear board (64) that receives an analog audio signal (U*) from said wear sensor (4) and processes said analog audio signal (U*) into a wear signal (U) that is a number indicative of the wear level,
- a first wireless communication module (66) to transmit at least said wear signal (U) to said gateway (8), which transmits said wear signal (U) to said cloud storing platform (9) on the Internet, and
- a second wireless communication module (68) connected to said leak board for a transmission and reception of the leak signal (S) between two adjacent control boxes;
wherein said control boxes (6) comprise at least one master control box (6a) and one slave control box (6b);
the master control box (6a) being configured to process a remote leak signal (S_{R}) from an audio signal (S_{R}*) of its leak sensor (3) and to transmit said remote leak signal (S_{R}) to said slave control box (6b);
the slave control box (6b) being configured to process a local leak signal (SL) from an audio signal (S_{L}*) of its leak sensor (3), to receive said remote leak signal (S_{R}) from the master control box (6a), to synchronize said remote leak signal (S_{R}) and said local leak signal (S_{L}), to convert said remote leak signal (S_{R}) and said local leak signal (S_{L}) into digital format and to transmit said remote leak signal (S_{R}) and said local leak signal (S_{L}) in digital format to said gateway (8) by means of said first wireless communication modules (66).

2. The monitoring system (100) of claim 1, wherein each control box (6) comprises a supervisor (65) electrically connected to the leak board (63), to the wear board (64), to the first wireless communication module (66) and to the second wireless communication module (68), and configured to synchronize the transmission and reception of the leak signal (S) between the second wireless communication modules (68) of a master control box and a slave control box, to synchronize the transmission of the remote leak signal (S_{R}) and the local leak signal (S_{L}) from the first wireless communication module (66) of the slave control box, and to synchronize the transmission of the wear signal (U) from the first wireless communication module (66) of each control box.

3. The monitoring system (100) of claim 2, wherein each control box (6) comprises a GPS module (67) connected to said supervisor (65).

4. The monitoring system (100) of claim 2 or 3, wherein each control box (6) comprises a power supply system (60) and a voltage sensor (61) connected to the power supply system (60) to detect a voltage indicative of a correct operation of the power supply system; said voltage sensor (61) being connected to the supervisor (65) configured to send voltage signals detected by said voltage sensor to said gateway (8) by means of said first wireless communication module (66).

5. The monitoring system (100) according to any one of claims 2 to 4, wherein each control box (6) comprises a temperature sensor (62) disposed in the control box to detect a temperature of the control box; said temperature sensor (62) being connected to the supervisor (65) configured to send temperature signals detected by said temperature sensor to said gateway (8) by means of said first wireless communication module (66).

6. The monitoring system (100) according to any one of the preceding claims, wherein said power supply system (60) comprises a rechargeable battery (160) and said monitoring system (100) comprises at least one solar panel (7) connected to said power supply system (60).

7. The monitoring system (100) according to any one of claims 2 to 6, wherein said supervisor (65) is configured to manage a power supply of the leak board (63), of the wear board (64), of the first wireless communication module (66) and of the second wireless communication module (68) so as to power said devices only when they operate.

8. The monitoring system (100) of claim 7, wherein said control box (6) comprises:
- a first switch (T1) that opens/closes the power supply of the leak board (63),
- a second switch (T3) that opens/closes the power supply of the wear board (64),
- a third switch (T3) that opens/closes the power supply of the first wireless communication module (66), and
- a fourth switch (T4) that opens/closes the power supply of the second wireless communication module (68);
said switches being controlled by said supervisor (65).

9. The monitoring system (100) according to any one of the preceding claims, wherein the monitoring means (90) comprise:
- a wear algorithm to analyze the wear signals stored in the cloud storing platform (9), said wear algorithm being configured to compare the numerical value of the wear signal (U) with threshold values, so that if the numerical value of the wear signal is higher than a threshold value, it means that there is a risk of wear in a pipe section upstream the control box that has detected such a threshold wear value, and
- a leak algorithm to analyze the leak signals stored in the cloud storing platform; said leak algorithm being configured to perform a cross-correlation between the leak signals between two adjacent control boxes that identify a pipe section.

10. The monitoring system (100) according to any one of the preceding claims, wherein the leak sensor (3) is a piezo-ceramic transducer and the wear sensor (4) is a piezo-electric transducer.
